# FASCICULE DE BREVET EUROPEEN

(11) **EP 2 401 536 B1**
(45) Date de publication et mention de la délivrance du brevet: **03.04.2013**
(21) Numéro de dépôt: 10705603.8
(22) Date de dépôt: 26.02.2010
(51) Int. Cl.: F16K 31/122

(54) **DISPOSITIF DE COMMANDE OLEOPNEUMATIQUE DE VANNE AVEC MOYENS DE VERROUILLAGE PNEUMATIQUE**
OLEOPNEUMATISCHE VENTILSTEUEREINRICHTUNG MIT PNEUMATISCHEN VERRIEGELUNGSMITTELN
OLEOPNEUMATIC CONTROL DEVICE FOR A VALVE WITH PNEUMTAIC LOCKING MEANS

(30) Priorité: 27.02.2009 LU 91535
(43) Date de publication de la demande: 04.01.2012
(73) Titulaire: LUXEMBOURG PATENT COMPANY S.A., 7440 Lintgen (LU)
(72) Inventeur: MUZZO, Paul, F-57970 Yutz (FR)
(74) Mandataire: Lecomte, Didier
(86) Numéro de dépôt international: PCT/EP2010/052461
(87) Numéro de publication internationale: WO 2010/097456

(56) Documents cités:
- EP-A1- 1 426 626
- FR-A- 1 078 604
- US-A- 4 763 690
- US-A- 5 918 528

## Description

### Domaine technique

L'invention a trait à un dispositif de commande de vanne, plus particulièrement à un dispositif de commande à fluide sous pression, plus particulièrement encore à un dispositif de commande à fluide sous pression comprenant une démultiplication de l'effort de commande et/ou des moyens de verrouillage mécanique.

### Etat de la technique

Divers dispositifs de commande pneumatique pour vannes sont connus de l'état de technique.

Le document US 4,763,690 divulgue un tel dispositif couplé à une vanne pour bouteille de gaz sous pression. Ce dispositif de commande comporte un corps destiné être solidarisé au corps d'une vanne. Le corps du dispositif comprend une tige de commande en son centre et mobile selon son axe longitudinal. La partie basse de la tige est destinée à être reliée mécaniquement par attelage à une partie mobile de la vanne même. La partie haute de la tige est relié mécaniquement à un piston mobile en translation selon l'axe longitudinal. La partie haute du corps comprend une partie rapportée formant la cavité dans laquelle le piston est logé. Cette cavité et la face supérieure du piston forment la chambre de commande du dispositif. Un port de connexion pour fluide sous pression est prévu au centre de la partie haute rapportée du corps. Un ressort est prévu entre la face inférieure du piston et le corps du dispositif afin de maintenir la tige de commande en position haute en l'absence de pression dans la chambre de commande. Cette position correspond à une position fermée de la vanne. Lorsque la chambre de commande est alimentée en fluide sous pression, le piston exerce une force antagoniste à celle du ressort et fait descendre la tige et ouvre la vanne. Un dispositif de verrouillage mécanique est prévu. Il consiste en un blocage de la tige en position haute au moyen d'une mollette de commande agissant sur une tige à extrémité conique coulissant selon une direction perpendiculaire à l'axe longitudinal. Une rainure correspondant à l'extrémité conique est aménagée dans la tige.

Ce dispositif a l'avantage d'être assez simple de conception mais présente cependant une série d'inconvénients. En effet, les moyens de verrouillage sont extérieurs au dispositif en soi et manquent d'intégration. De plus, ces moyens requièrent un contrôle manuel du serrage, ce qui peut mener à une détérioration des moyens de verrouillage et/ou à un éventuel verrouillage non satisfaisant. Le verrouillage de ce dispositif, de par sa conception mécanique, est limité en puissance et ne peut être appliqué à un actuateur avec une démultiplication de l'effort. En effet, une surface du piston plus grande risquerait, en cas de présence du fluide de commande sous pression dans la chambre, de décoller l'obturateur du siège et donc d'ouvrir légèrement la vanne malgré les moyens de verrouillage.

Le document EP 1 426 626 A1 divulgue une vanne pour bouteille à gaz, comprenant une vanne de fermeture et un dispositif de commande de la vanne. La vanne proprement dite est du type classique, c'est-à-dire comprenant un obturateur mobile selon l'axe longitudinal et coopérant de manière étanche avec un siège usiné dans le corps de vanne. Le dispositif de commande est du type pneumatique, c'est-à-dire activé par une arrivée d'air sous pression. Il comporte un piston mobile selon l'axe longitudinal de la vanne et relié à l'obturateur via des moyens de démultiplication. Ces moyens comprennent quatre galets logés dans une chambre de manière symétrique par rapport à un plan comprenant l'axe longitudinal. Un pointeau est rigidement lié au piston et a la capacité d'entrer en contact via ses faces inclinées avec deux des quatre galets. La pénétration du pointeau dans les galets a pour effet d'écarter les deux galets du haut qui, de par leur déplacement latéral, vont pousser les deux galets du bas vers le bas. Ces deux galets du bas sont liés à un palier mobile commun qui est en appui sur la tige de commande de l'actuateur. La pression du pointeau a donc pour effet de fermer la vanne. Le piston est soumis aux efforts de fermeture de la vanne générés par deux ressorts concentriques. Une chambre est formée par la face inférieure du piston et la cavité du corps. Cette chambre peut être alimentée en air sous pression afin de déplacer le piston vers le haut en vue d'ouvrir la vanne. Le dispositif comprend des moyens de verrouillage en haut du corps de dispositif. Ces moyens comprennent une bague filetée avec une face inférieure à paroi inclinée, deux poussoirs diamétralement opposés en contact avec la paroi inclinée de la bague et en contact avec une partie haute biseautée du piston. Le fait de faire descendre la bague par mouvement de serrage va déplacer, via sa face inférieure biseautée, les deux poussoirs vers le centre du dispositif. Ces deux poussoirs vont entrer en pression contre la surface biseautée de la partie haute du piston et empêcher ainsi toute remontée de celui-ci.

Ce dispositif présente certes une fonctionnalité intéressante mais présente cependant quelques inconvénients. En effet, la construction de ce dispositif est assez compliquée de par le nombre important de pièces, dont certaines requièrent un usinage complexe et coûteux comme par exemple les galets, le palier des galets et les poussoirs. L'assemblage d'un tel dispositif est également assez complexe vu le nombre de pièces à ajuster avec précision. L'activation des moyens de verrouillage requiert de plus une opération de serrage ce qui, tout comme pour l'enseignement du document précédent, peut mener à une détérioration des moyens de verrouillage et/ou à un éventuel verrouillage non satisfaisant.

### Exposé de l'invention

L'invention a pour objectif de pallier au moins un des inconvénients sus mentionnés. L'invention consiste en un dispositif de commande de vanne, comprenant : un corps du dispositif avec un axe longitudinal; un organe de commande de la vanne, logé au moins partiellement dans le corps à une partie basse selon l'axe longitudinal; un piston mobile selon l'axe longitudinal, le piston étant logé dans une partie du corps formant avec le piston la chambre de commande du piston, cette chambre étant destinée à être connectée à une arrivée de fluide sous pression, le dispositif étant construit de sorte que le piston soit apte à transmettre son mouvement à l'organe de commande en vue de commander la vanne; le dispositif comprenant en outre un élément mobile en rotation par rapport à l'axe longitudinal sur une partie haute du corps ; l'élément mobile comportant un port de connexion du fluide sous pression excentré par rapport à l'axe longitudinal ; la chambre de commande comportant en regard de l'élément mobile un passage pareillement excentré au port de connexion; des moyens d'étanchéité entre l'élément mobile et la chambre de commande au niveau du port de connexion et/ou du passage, de sorte à assurer une étanchéité de la veine fluide lorsque le port de connexion et le passage sont alignés par manipulation adéquate de l'élément mobile.

Ce dispositif présente une mesure de sécurité simple consistant à agir directement sur l'arrivée du fluide sous pression. Cette sécurité est particulièrement intéressante dans la mesure où elle agit directement sur la source de l'effort et est activable par une simple rotation d'un élément mobile du dispositif. Ceci permet de le combiner avec d'autres moyens de verrouillage qui peuvent ainsi être activés ou désactivés par une simple et unique manipulation.

Avantageusement, l'élément mobile comprend une partie en forme de disque perpendiculaire à l'axe longitudinal et comportant le port de connexion, la chambre de commande comprend une surface plane extérieure vis-à-vis de laquelle la partie en forme de disque de l'élément mobile se déplace en rotation.

Avantageusement, l'élément mobile comprend une partie généralement cylindrique. La chambre de commande est formée par une cavité ouverte du corps sur lequel un élément en forme de couvercle est fixé, préférentiellement par vissage, ledit élément en forme de couvercle comprenant la surface plane extérieure de la chambre de commande.

Avantageusement, les moyens d'étanchéité sont placés au niveau de l'élément mobile.

Avantageusement, les moyens d'étanchéité comprennent un joint logé dans une gorge contournant l'orifice du port de connexion et formé dans la surface intérieure de la partie en forme de disque de l'élément mobile.

Avantageusement, la surface plane extérieure de la chambre de commande comprend une piste pour les moyens d'étanchéité placés au niveau de l'élément mobile.

Avantageusement, la piste coopère de manière étanche avec les moyens d'étanchéité de l'élément mobile de sorte à fermer le port de connexion lorsqu'il est éloigné du passage de la chambre de commande.

Avantageusement, les moyens d'étanchéité sont placés au niveau de la chambre de commande, préférentiellement les moyens d'étanchéité comprennent un joint placé dans une gorge contournant le passage et formée dans la surface plane extérieure de la chambre de commande.

Avantageusement, la partie en forme de disque de l'élément mobile comprend une piste se déplaçant par glissement sur les moyens d'étanchéité lors de la rotation de l'élément mobile.

Avantageusement, le dispositif comprend des moyens de blocage mécanique de l'organe de commande de la vanne par rapport au corps du dispositif, les moyens de blocage mécanique étant préférentiellement activés par la rotation de l'élément mobile.

Avantageusement, les moyens de blocage mécanique comprennent une bague d'activation desdits moyens, la bague étant montée autour du corps du dispositif via un filetage, la bague comprenant une liaison mécanique en rotation avec l'élément mobile.

Avantageusement, le corps comprend un bouton poussoir apte à coopérer avec la bague d'activation en vue d'indexer sa position.

Avantageusement, l'élément mobile est en regard de la bague et comprend une série d'éléments cylindriques montés dans des alésages parallèles à l'axe longitudinal correspondant et coopérant avec des encoches correspondantes ménagées dans la bague selon l'axe longitudinal.

Avantageusement, les moyens de blocage mécanique comprennent des éléments radiaux de compression coopérant avec une surface inclinée par rapport à l'axe longitudinal de la bague et une surface inclinée par rapport à l'axe longitudinal de l'organe de commande.

Avantageusement, les éléments radiaux de compression comprennent des billes en acier.

Avantageusement, des moyens de visualisation de l'état d'ouverture ou fermeture de la vanne reliée au dispositif sont prévus au niveau des parties centrale et supérieure du dispositif.

Ces moyens peuvent consister en un élément attelé au piston et apte à coulisser de manière étanche avec la paroi supérieure de la chambre de commande.

D'autres particularités de l'invention vont apparaître dans la description de l'exemple de réalisation représenté aux figures.

### Brève description des figures

La figure 1 est une vue en plan du dispositif de commande de vanne selon l'invention.
La figure 2 est une vue en coupe selon l'axe C-C du dispositif de la figure 1.
La figure 3 est une vue en coupe selon l'axe D-D du dispositif de la figure 2.

### Meilleure façon de réaliser l'invention

La description suivante fait référence à des notions géographiques telles que « supérieur(e) », « haut(e) », « inférieur(e) » ou encore « bas(se) ». Ces notions sont employées à titre indicatif uniquement en relation avec l'orientation du dispositif sur les figures et pour la clarté de l'exposé. Ces notions ne doivent en aucun cas être interprétées comme absolues et limitatives mais plutôt uniquement en relation avec l'orientation et l'application du dispositif selon les figures.

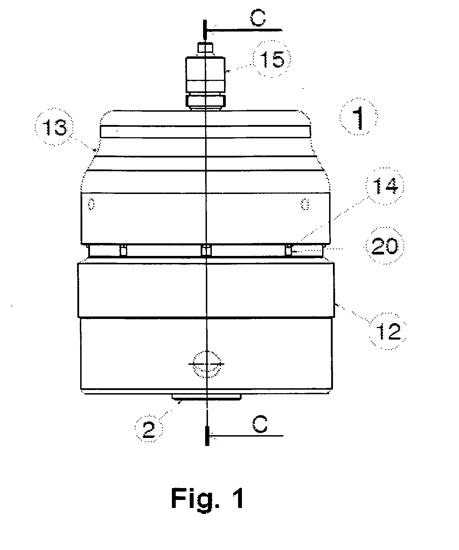

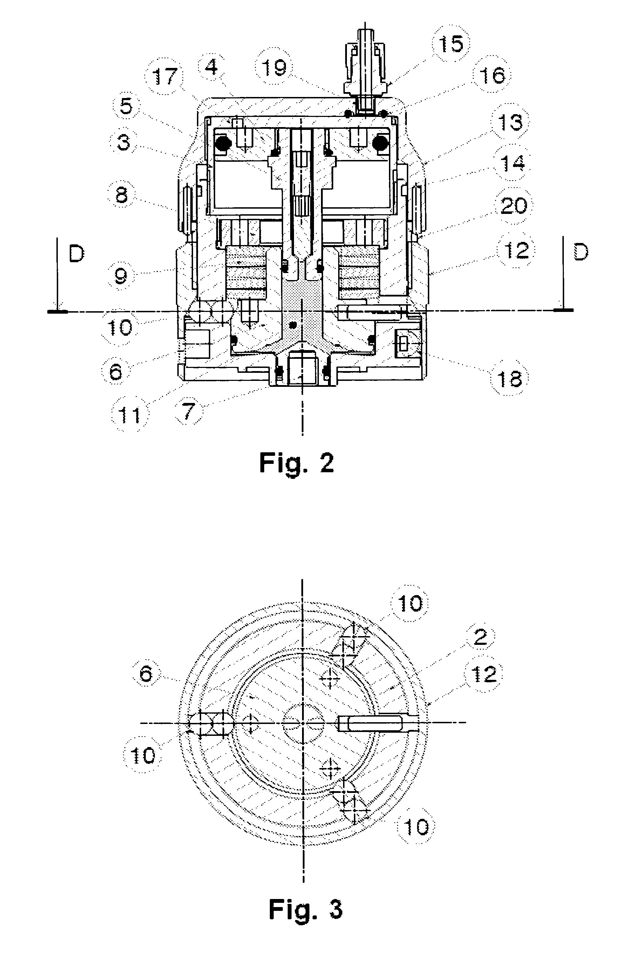

Un dispositif de commande de vanne selon l'invention est représenté aux figures 1, 2 et 3. La figure 2 illustre le mieux les détails de construction du dispositif, les figures 1 et 3 illustrant mieux certains aspects techniques particuliers. La description de construction du dispositif sera donc basée dans un premier temps sur la figure 2 et ensuite sur les figures 1 et 3 pour les aspects techniques correspondants.

Le dispositif de commande vanne 1 illustré à la figure 2 comprend un corps constitué essentiellement de deux éléments, un élément principal 2 et un élément 3 rapporté par vissage. Un organe de commande 6 est logé de manière coulissante selon l'axe longitudinal du dispositif. Cet organe de commande 6 comporte à son extrémité inférieure des moyens d'attelage à un obturateur de vanne (non représenté). Ces moyens d'attelage sont réalisés dans le cas de cet exemple de réalisation par un alésage fileté 7. L'organe de commande 6 fait partie d'un mécanisme de démultiplication de l'effort de commande qui va être décrit ci-après.

Un piston 4 est logé dans l'élément supérieur 3 du corps du dispositif. Cet élément 3 comprend une partie inférieure cylindrique dans laquelle le piston 4 est logé de manière à coulisser selon l'axe longitudinal du dispositif. L'élément principal 2 du corps comporte outre un perçage pour le guidage de l'extrémité inférieure de l'organe de commande 6, une cavité essentiellement symétrique en révolution destinée à recevoir l'organe de commande. Ce dernier comporte une partie cylindrique plus large apte à coulisser dans le corps 2. La face inférieure de cette partie cylindrique définit avec les moyens d'étanchéité présents entre la partie cylindrique et la cavité du corps 2 et entre l'extrémité inférieure et le perçage du corps 2 une chambre haute pression 11 remplie d'huile. L'organe de commande comprend également une partie supérieure plus étroite, en forme de cheminée. Un empilement de ressorts 9 du type belleville est enfilé autour de cette partie haute de l'organe de commande. Ces ressorts sont en appui sur une butée 8 logée et fixée dans le corps 2 par un filetage. Ces moyens élastiques exercent ainsi un effort permanent sur l'organe de commande 6 dirigé vers le bas dans le sens de fermeture de la vanne.

La partie haute de l'organe de commande comprend un alésage cylindrique débouchant à son extrémité supérieure. Un piston hydraulique 5 est logé de manière coulissante et étanche dans cet alésage. Le piston hydraulique 5 est rigidement relié au piston pneumatique 4. Les moyens d'étanchéité (ici typiquement un joint du type o-ring) entre le piston hydraulique et l'alésage de l'organe de commande ferment la chambre hydraulique 11. Le piston hydraulique 5 comprend des moyens de remplissage d'huile de commande et de fermeture.

La face supérieure du piston pneumatique 4 et l'élément supérieur 3 du corps du dispositif forment une chambre de commande du piston. A la figure 3, la chambre est réduite à un volume pratiquement nul car le piston est en contact avec la face interne de la partie en forme de disque de l'élément supérieur 3. Une fois cette chambre alimentée en air comprimé, la face supérieure du piston 4 est soumise à un effort résultant de la pression de l'air régnant dans la chambre et de la surface effective du piston. Cet effort fait descendre le piston pneumatique 4 ainsi que le piston hydraulique 5. Ce dernier en se déplaçant vers le bas augmente la pression de l'huile dans la chambre 11, ce qui fait remonter l'organe de commande 6 contre l'effort des ressorts 9 et fait ouvrir la vanne. Ce mécanisme de démultiplication permet d'inverser l'effort de commande du piston pneumatique et également d'amplifier l'effort de commande. En effet, l'effort auquel l'organe de commande 6 est soumis par le fluide hydraulique dans la chambre 11 correspond à l'effort de commande des pistons 4 et 5 multiplié par les rapport des surfaces entre la surface effective de l'organe de commande (l'anneau sur sa face inférieure) et la surface effective du piston hydraulique 5 (en négligeant les pertes par frottement).

Des moyens mécaniques de verrouillage sont prévus au niveau de l'organe de commande 6. Ils comprennent trois paires de billes disposées dans des perçages perpendiculaires à l'axe longitudinal. Chaque paire de billes est logée dans un perçage respectif, ces perçages étant répartis uniformément selon des axes à 120° l'un de l'autre. Chaque perçage débouche vers l'extérieur et vers l'intérieur de l'élément principal 2 du corps. L'organe de commande comporte une section de surface latérale qui est inclinée. La bille la plus centrale de chaque paire est en contact avec cette section de surface. Ces paires de billes sont mobiles selon l'axe du perçage de sorte à servir de butée mécanique pour la section de surface de l'organe de commande. Une bague 12 d'activation des moyens de verrouillage est prévue autour de l'élément principal 2 du corps du dispositif. Cette bague 12 est de forme généralement cylindrique avec une surface extérieure moletée pour la facilité de manipulation. La bague 12 est montée sur le corps au moyen d'un filetage afin de pouvoir la déplacer selon l'axe longitudinal par une manipulation en rotation. Elle comprend en regard des perçages dans lesquels les billes sont logées une surface continue symétrique en révolution qui est inclinée. La descente progressive de la bague 12 par manipulation en rotation a pour effet de déplacer les paires de billes légèrement vers l'axe longitudinal du dispositif et de les mettre en pression contre la section de surface inclinée de l'organe de commande, assurant ainsi un verrouillage mécanique. La section de surface est inclinée de sorte à ce que la pression des billes sur ellegénère un effort dirigé vers le bas qui est le sens de fermeture de la vanne.

L'arrivée en air ou fluide sous pression dans la chambre de commande est contrôlée par la position de l'élément mobile 13. Ce dernier est en forme de cloche ou cylindre fermée à son haut par une surface en forme de disque. Il est monté mobile en rotation sur le corps du dispositif en appui sur la surface extérieure de l'élément principal 2 et l'élément supérieur 3 du corps du dispositif. Il est maintenu en place par une série de vis disposées radialement dans l'épaisseur de la jupe de manière à coopérer avec une gorge (pas de signe de référence) prévue dans la partie haute de l'élément principal 2 du corps. L'emplacement de ces vis peut être visualisé aux deux petits cercles au niveau de la jupe de l'élément mobile 13 à la figure 1. L'élément mobile 13 comporte un port 19 de connexion à une source de fluide sous pression. Ce port est en fait un orifice fileté dans lequel un raccord de connexion 15 est vissé. Ce port de connexion 19 est excentré par rapport à l'axe longitudinal. L'orifice du port 19 débouche sur la surface intérieure de la partie en forme de disque de l'élément mobile 13. La face extérieure supérieure de l'élément supérieur 3 du corps du dispositif est en regard de la face intérieure de la partie en forme de disque de l'élément mobile 13. Elle comporte un orifice de passage 17 pareillement excentré au port de connexion 19. Cet orifice de passage est en liaison directe avec la chambre de commande du piston pneumatique 4 et constitue la seule connexion d'alimentation en fluide comprimé de cette chambre. Des moyens d'étanchéité sont prévus au niveau du port de connexion 19. Ils consistent en un joint 16, typiquement du type o-ring, disposé dans une gorge formée dans la surface intérieure de l'élément mobile 13 et entourant l'orifice du port de connexion 19. Ce joint 16 est apte à assurer une étanchéité de la veine fluide alimentant la chambre de commande lorsque le port de connexion 19 et l'orifice de passage 17 sont alignés.

Le fait de loger le joint dans une gorge assure un meilleur maintien qu'un simple lamage. De plus, le diamètre intérieur du joint est supérieur au moins dans un rapport de 2 à 1, préférentiellement de 3 à 1, par rapport au diamètre intérieur de l'orifice de passage. Cette mesure permet un passage du joint au dessus de l'orifice de passage sans accrochage. La surface extérieure supérieure de l'élément supérieur 3 du corps du dispositif constitue une piste sur laquelle le joint 16 va glisser lorsque l'élément mobile 13 est manipulé en rotation. Lorsque l'élément mobile 13 est dans une position angulaire telle que le joint 16 est totalement éloigné de l'orifice de passage 17, l'arrivée de fluide sous pression est fermée et, de plus, la chambre de commande du piston pneumatique 4 est mise à l'air de par les fuites intrinsèques entre les surfaces extérieure et intérieure de l'élément supérieur 3 du corps et l'élément mobile 13, respectivement. La manipulation en rotation de l'élément mobile joue le rôle de vanne de mise en pression ou de mise à l'air de la chambre de commande et également le rôle de fermeture de l'arrivée de fluide sous pression. Ceci constitue une sécurité supplémentaire qui peut s'avérer nécessaire en raison du grand rapport de démultiplication du dispositif. En effet, les moyens mécaniques de verrouillage bien qu'agissant directement sur l'organe de commande 6 de la vanne peuvent s'avérer insuffisants pour éviter une ouverture même partielle de la vanne lorsque la chambre de commande du piston pneumatique est alimentée en air. La coupure en alimentation en air de la chambre procure une sécurité supplémentaire.

Des moyens de liaison en rotation sont prévus entre l'élément mobile 13 et la bague de verrouillage 12. Ils consistent en des petits cylindres ou goupilles 14 logées parallèlement à l'axe longitudinal dans des perçages dans la tranche de la partie basse de l'élément mobile 13. Ces perçages sont répartis uniformément sur la périphérie de l'élément mobile 13. Ces goupilles 14 dépassent légèrement de la tranche de la partie basse de l'élément mobile 13. La surface extérieure de la bague 12 est pourvue à son bord supérieur d'une série d'évidements 20 partiellement cylindriques et parallèles à l'axe longitudinal du dispositif et répartis uniformément sur la périphérie en correspondance avec les goupilles 14. De la sorte, les extrémités des goupilles en saillie de l'élément mobile 13 coopèrent avec les évidements ou encoches 20 de sorte à assurer une liaison en rotation entre l'élément mobile et la bague d'activation des moyens de verrouillage mécanique, tout en permettant un déplacement relatif entre ces deux selon l'axe longitudinal. La manipulation en rotation de la bague 12 va donc entrainer l'élément mobile 13.

Un bouton poussoir 18 est prévu dans le bas de l'élément principal du corps du dispositif, disposé selon une direction radiale perpendiculaire à l'axe longitudinal. Le bouton poussoir coopère avec un orifice correspondant prévu dans la partie inférieure ou jupe de la bague 12. Lors de la manipulation en rotation de la bague, le bouton poussoir, une fois aligné, va pénétrer dans l'orifice de la jupe de la bague 12. Ceci correspond à la position de travail du dispositif où les moyens de verrouillage mécanique sont désactivés et le port de connexion 19 et l'orifice de passage 17 de la chambre de commande sont alignés.

Des moyens de visualisation de l'état fermé et/ou ouvert de la vanne reliée au dispositif peuvent être prévus au sommet du dispositif (non représentés aux figures). Ces moyens peuvent comprendre un élément attelé au piston 4 et être aptes à se déplacer selon l'axe longitudinal et de manière étanche avec l'élément supérieur 3 du corps formant la paroi supérieure de la chambre de commande. En effet, cet élément supérieur peut présenter une extension centrale en forme de cheminée ou de cylindre avec des moyens d'étanchéité coopérant avec un élément cylindrique de visualisation (non représenté) se déplaçant selon l'axe longitudinal de concert avec le piston 4. L'élément mobile peut comporter une ouverture centrale à sa partie supérieure qui coopère avec l'extension cylindrique au sommet de l'élément supérieur du corps du dispositif. Cette partie cylindrique peut être sous forme de cheminée ou de bossage selon les applications. Un couvercle transparent pourrait être fixé au sommet du dispositif en vue de protéger cet élément de visualisation et les moyens d'étanchéité tout en permettant une visualisation de la position de l'élément. Diverses alternatives ou améliorations de ces moyens de visualisation connues de l'homme de métier sont bien sûr applicables à ce dispositif, sachant que c'est le fait d'excentrer le port de connexion au fluide sous pression qui libère de manière inventive la partie centrale du sommet du dispositif.

Bien que l'invention prenne tout son sens en combinaison avec un mécanisme d'amplification de l'effort résultant de la partie pneumatique et avec des moyens mécaniques de verrouillage, il n'est reste pas moins que l'essence même de l'invention est applicable à des configurations autres, en particulier à un dispositif de commande comprenant une partie pneumatique et sans amplification et/ou sans moyens de verrouillage. Le principe de contrôle de l'alimentation en fluide sous pression reste applicable et présente les mêmes avantage de sécurité.

Diverses alternatives à l'exemple de réalisation décrit ci-avant sont envisageables. En effet, le dispositif d'amplification avec la chambre d'huile peut être remplacé par d'autres dispositifs d'amplification. L'inversion de mouvement assurée par le dispositif d'amplification avec la chambre d'huile n'est pas obligatoire. En effet, on pourrait imaginer que la chambre en question soit sur l'autre face de la partie piston de l'organe de commande de sorte à le déplacer vers le bas en cas de commande du piston pneumatique. Dans ce cas, les ressorts ou autres moyens élastiques seraient disposés de l'autre côté, c'est-à-dire du côté de la chambre selon les figures 1-3 et le dispositif serait applicable à une vanne dont la fermeture se fait par un mouvement de montée de l'obturateur. Les moyens de verrouillage mécanique ne doivent pas nécessairement comporter des billes. Diverses alternatives équivalentes sont envisageables, comme par exemple des poussoirs cylindriques. Une seule bille ou trois billes par perçage est également envisageable en fonction de l'épaisseur de la paroi du corps du dispositif. Le nombre de perçage est fonction du dimensionnement général du dispositif. On pourrait prévoir seulement deux perçages diamétralement opposés ou encore quatre ou plus encore répartis uniformément ou non.

Les moyens d'étanchéité entre le port de connexion 19 et l'orifice de passage 17 de la chambre de commande peuvent être disposés sur la face extérieure de l'élément supérieur 3 du corps, similairement à la disposition des figures 1-3. Dans ce cas, le port de connexion serait mis à l'air dès qu'il serait éloigné des moyens d'étanchéité. Dans une pareille position, la chambre de commande serait fermée dans la mesure où les moyens d'étanchéité seraient en contact étanche avec la surface interne de l'élément mobile. On pourrait envisager de travailler la partie de cette surface servant de piste aux moyens d'étanchéité de sorte à assurer des fuites et de mettre la chambre à l'ambiance.

D'autres moyens de liaison en rotation entre l'élément mobile et la bague d'activation des moyens de verrouillage mécanique peuvent être envisagés.

## Revendications

1. Dispositif de commande de vanne, comprenant :
un corps (2, 3) du dispositif avec un axe longitudinal ;
un organe de commande (6) de la vanne, logé au moins partiellement dans le corps (2) à une partie basse selon l'axe longitudinal ;
un piston (4) mobile selon l'axe longitudinal, le piston (4) étant logé dans une partie du corps (2, 3) formant avec le piston (4) une chambre de commande du piston, la chambre étant destinée à être connectée à une arrivée de fluide sous pression, le dispositif étant construit de sorte que le piston (4) soit apte à transmettre son mouvement à l'organe de commande (6) en vue de commander la vanne ;
**caractérisé en ce qu'**il comprend en outre
un élément (13) mobile en rotation par rapport à l'axe longitudinal sur une partie haute du corps (2, 3) ; l'élément mobile (13) comportant un port de connexion (19) du fluide sous pression excentré par rapport à l'axe longitudinal ; la chambre de commande comportant en regard de l'élément mobile (13) un passage (17) pareillement excentré au port de connexion (19) ;
des moyens d'étanchéité (16) entre l'élément mobile (13) et la chambre de commande au niveau du port de connexion (19) et/ou du passage (17), de sorte à assurer une étanchéité de la veine fluide lorsque le port de connexion (19) et le passage (17) sont alignés par manipulation adéquate de l'élément mobile (13).

2. Dispositif selon la revendication 1, **caractérisé en ce que** l'élément mobile (13) comprend une partie en forme de disque perpendiculaire à l'axe longitudinal et comportant le port de connexion (19), la chambre de commande comprend une surface plane extérieure vis-à-vis de laquelle la partie en forme de disque de l'élément mobile se déplace en rotation.

3. Dispositif selon la revendication précédente, **caractérisé en ce que** l'élément mobile (13) comprend une partie généralement cylindrique et la chambre de commande est formée par une cavité ouverte du corps (2) sur lequel un élément en forme de couvercle (3) est fixé, préférentiellement par vissage, ledit élément en forme de couvercle (3) comprenant la surface plane extérieure de la chambre de commande.

4. Dispositif selon l'une des revendications 2 et 3, **caractérisé en ce que** les moyens d'étanchéité (16) sont placés au niveau de l'élément mobile (13).

5. Dispositif selon la revendication précédente, **caractérisé en ce que** les moyens d'étanchéité comprennent un joint (16) logé dans une gorge contournant l'orifice du port de connexion (19), celle-ci étant formée dans la surface intérieure de la partie en forme de disque de l'élément mobile (13).

6. Dispositif selon l'une des revendications 4 et 5, **caractérisé en ce que** la surface plane extérieure de la chambre de commande comprend une piste pour les moyens d'étanchéité (16) placés au niveau de l'élément mobile (13).

7. Dispositif selon la revendication précédente, **caractérisé en ce que** la piste coopère de manière étanche avec les moyens d'étanchéité (16) de l'élément mobile de sorte à fermer le port de connexion lorsqu'il est éloigné du passage de la chambre de commande.

8. Dispositif selon la revendication 2, **caractérisé en ce que** les moyens d'étanchéité sont placés au niveau de la chambre de commande, préférentiellement les moyens d'étanchéité comprennent un joint placé dans une gorge contournant le passage et formée dans la surface plane extérieure de la chambre de commande.

9. Dispositif selon la revendication précédente, **caractérisé en ce que** la partie en forme de disque de l'élément mobile comprend une piste se déplaçant par glissement sur les moyens d'étanchéité lors de la rotation de l'élément mobile.

10. Dispositif selon l'une des revendications précédentes, **caractérisé en ce qu'**il comprend des moyens de blocage mécanique (10, 12) de l'organe de commande (6) de la vanne par rapport au corps (2) du dispositif, les moyens de blocage mécanique (10, 12) étant préférentiellement activés par la rotation de l'élément mobile (13).

11. Dispositif selon la revendication précédente, **caractérisé en ce que** les moyens de blocage mécanique (10, 12) comprennent une bague d'activation (12) desdits moyens, la bague étant montée autour du corps (2) du dispositif via un filetage, la bague (12) comprenant une liaison mécanique (14, 20) en rotation avec l'élément mobile (13).

12. Dispositif selon la revendication précédente, **caractérisé en ce que** le corps (2) comprend un bouton poussoir (18) apte à coopérer avec la bague d'activation (12) en vue d'indexer sa position.

13. Dispositif selon la revendication précédente, **caractérisé en ce que** l'élément mobile (13) est en regard de la bague (12) et comprend une série d'éléments cylindriques (14) montés dans des alésages parallèles à l'axe longitudinal correspondant et coopérant avec des encoches (20) correspondantes ménagées dans la bague (12) selon l'axe longitudinal.

14. Dispositif selon l'une des revendications 12 et 13, **caractérisé en ce que** les moyens de blocage mécanique (10, 12) comprennent des éléments radiaux de compression (10) coopérant avec une surface inclinée par rapport à l'axe longitudinal de la bague (12) et une surface inclinée par rapport à l'axe longitudinal de l'organe de commande (6).

15. Dispositif selon la revendication précédente, **caractérisé en ce que** les éléments radiaux de compression comprennent des billes en acier (10).

## Claims

1. Valve control device, comprising:
a body (2, 3) of the device with a longitudinal axis;
a valve control mechanism (6), housed at least partially in a lower part of the body (2) along the longitudinal axis;
a piston (4), movable along the longitudinal axis, the piston (4) being housed in a part of the body (2, 3) forming together with the piston (4) a piston control chamber, the chamber being intended to be connected to a pressurised fluid inlet, the device being constructed so that the piston (4) is able to transmit its movement to the control mechanism (6) for controlling the valve;
wherein it further comprises
a movable element (13) rotatable relative to the longitudinal axis on an upper part of the body (2, 3), the movable element (13) having a pressurised fluid connection port (19) eccentric to the longitudinal axis, the control chamber having a passage (17) opposite the movable element (13) similarly offset to the connection port (19);
means of sealing (16) between the movable element (13) and the control chamber at the connection port (19) and/or the passage (17), so as to ensure the fluid stream is sealed when the connection port (19) and the passage (17) are aligned by appropriate adjustment of the movable element (13).

2. Device according to Claim 1, wherein the movable element (13) comprises a disc-shaped portion perpendicular to the longitudinal axis and containing the connection port (19), the control chamber comprising an exterior planar surface relative to which the disc-shaped portion of the movable element moves in rotation.

3. Device according to the preceding claim, wherein the movable element (13) comprises a generally cylindrical portion and the control chamber is formed by an open cavity in the body (2) on which a cover-like element (3) is fixed, preferably by screwing, the said cover-like element (3) comprising the control chamber's outer planar surface.

4. Device according to one of Claims 2 and 3, wherein the means of sealing (16) are located in the movable element (13).

5. Device according to the preceding claim, wherein the means of sealing comprise a seal (16) housed in a groove around the edge of the opening of the connection port (19), the latter being formed in the inner surface of the disc-shaped part of the movable element (13).

6. Device according to one of Claims 4 and 5, wherein the control chamber's outer planar surface comprises a track for the means of sealing (16) located in the movable element (13).

7. Device according to the preceding claim, wherein the track forms a seal together with the means of sealing (16) of the movable element so as to close the connection port when it is separated from the control chamber's passage.

8. Device according to Claim 2, wherein the means of sealing are located in the control chamber, the means of sealing preferably comprising a seal placed in a groove surrounding the passage and formed in the control chamber's outer planar surface.

9. Device according to the preceding claim, wherein the disc-shaped portion of the movable element comprises a track that moves by sliding on the means of sealing during rotation of the movable element.

10. Device according to one of the preceding claims, wherein it comprises a means of mechanically locking (10, 12) the control mechanism (6) of the valve relative to the body (2) of the device, the means of mechanical locking (10, 12) preferably being activated by rotating the movable element (13).

11. Device according to the preceding claim, wherein the means of mechanical locking (10, 12) include an activating ring (12) of the said means, the ring being mounted around the body (2) of the device via a thread, the ring (12) comprising a mechanical linkage (14, 20) rotating with the movable element (13).

12. Device according to the preceding claim, wherein the body (2) comprises a push-button (18) linked to the activating ring (12) in order to index its position.

13. Device according to the preceding claim, wherein the movable element (13) is opposite the ring (12) and comprises a series of cylindrical elements (14) mounted in bores parallel to the longitudinal axis thereof and in contact with matching slots (20) arranged in the corresponding ring (12) along the longitudinal axis.

14. Device according to one of Claims 12 and 13, wherein the means of mechanical locking (10, 12) comprise radial compression elements (10) in contact with a surface inclined relative to the longitudinal axis of the ring (12) and a surface inclined with respect to the longitudinal axis of the control member (6).

15. Device according to the preceding claim, wherein the radial compression members comprise steel balls (10).

## Patentansprüche

1. Ventilsteuervorrichtung, enthaltend:
einen Vorrichtungskörper (2, 3) mit einer Längsachse,
ein Steuerglied (6) zum Steuern des Ventils, das zumindest teilweise in dem Körper (2) an einem unteren Abschnitt entlang der Längsachse aufgenommen ist,
einen Kolben (4), der entlang der Längsachse beweglich ist, wobei der Kolben (4) in einem Abschnitt des Körpers (2, 3) aufgenommen ist, der mit dem Kolben (4) eine Steuerkammer für den Kolben bildet, wobei die Kammer dazu bestimmt ist, mit einer Druckmediumzufuhr verbunden zu werden, wobei die Vorrichtung derart konstruiert ist, dass der Kolben (4) in der Lage ist, seine Bewegung auf das Steuerglied (6) zu übertragen, um das Ventil zu steuern,
**dadurch gekennzeichnet, dass** sie ferner enthält:
ein bezüglich der Längsachse drehbares Element (13) an einem oberen Abschnitt des Körpers (2, 3), wobei das bewegliche Element (13) einen bezüglich der Längsachse exzentrisch angeordneten Verbindungsanschluss (19) für das Druckmedium aufweist, wobei die Steuerkammer dem beweglichen Element (13) gegenüberliegend einen Durchgang (17) aufweist, der in gleicher Weise bezüglich des Verbindungsanschlusses (19) exzentrisch angeordnet ist,
Dichtungsmittel (16) zwischen dem beweglichen Element (13) und der Steuerkammer im Bereich des Verbindungsanschlusses (19) und/oder des Durchgangs (17), so dass eine Dichtheit für den Mediumstrom sichergestellt ist, wenn der Verbindungsanschluss (19) und der Durchgang (17) durch geeignete Handhabung des beweglichen Elements (13) ausgerichtet werden.

2. Vorrichtung nach Anspruch 1, **dadurch gekennzeichnet, dass** das bewegliche Element (13) einen scheibenförmigen Abschnitt aufweist, der senkrecht zur Längsachse verläuft und den Verbindungsanschluss (19) enthält, wobei die Steuerkammer eine ebene Außenfläche aufweist, gegenüber welcher der scheibenförmige Abschnitt des beweglichen Elements sich drehend verlagert.

3. Vorrichtung nach dem vorangehenden Anspruch, **dadurch gekennzeichnet, dass** das bewegliche Element (13) einen insgesamt zylindrischen Abschnitt aufweist und die Steuerkammer aus einem offenen Hohlraum des Körpers (2) gebildet ist, an den ein deckelförmiges Element (3) vorzugsweise durch Verschrauben befestigt ist, wobei das deckelförmige Element (3) die ebene Außenfläche der Steuerkammer enthält.

4. Vorrichtung nach einem der Ansprüche 2 und 3, **dadurch gekennzeichnet, dass** die Dichtungsmittel (16) im Bereich des beweglichen Elements (13) angeordnet sind.

5. Vorrichtung nach dem vorangehenden Anspruch, **dadurch gekennzeichnet, dass** die Dichtungsmittel eine Dichtung (16) aufweisen, die in einer die Öffnung des Verbindungsanschlusses (19) umgehenden Nut aufgenommen ist, welche in der Innenfläche des scheibenförmigen Abschnitts des beweglichen Elements (13) ausgebildet ist.

6. Vorrichtung nach einem der Ansprüche 4 und 5, **dadurch gekennzeichnet, dass** die ebene Außenfläche der Steuerkammer eine Bahn für die Dichtungsmittel (16) aufweist, die im Bereich des beweglichen Elements (13) angeordnet sind.

7. Vorrichtung nach dem vorangehenden Anspruch, **dadurch gekennzeichnet, dass** die Bahn in dichter Weise mit den Dichtungsmitteln (16) des beweglichen Elements so zusammenwirkt, dass der Verbindungsanschluss verschlossen wird, wenn er von dem Durchgang der Steuerkammer entfernt liegt.

8. Vorrichtung nach Anspruch 2, **dadurch gekennzeichnet, dass** die Dichtungsmittel im Bereich der Steuerkammer angeordnet sind, wobei die Dichtungsmittel vorzugsweise eine Dichtung aufweisen, die in einer den Durchgang umgehenden Nut angeordnet ist, welche in der ebenen Außenfläche der Steuerkammer ausgebildet ist.

9. Vorrichtung nach dem vorangehenden Anspruch, **dadurch gekennzeichnet, dass** der scheibenförmige Abschnitt des beweglichen Elements eine Bahn aufweist, die sich bei Drehung des beweglichen Elements an den Dichtungsmitteln gleitbeweglich verlagert.

10. Vorrichtung nach einem der vorangehenden Ansprüche, **dadurch gekennzeichnet, dass** sie Mittel (10, 12) zum mechanischen Sichern des Steuerglieds (6) des Ventils bezüglich des Körpers (2) der Vorrichtung aufweist, wobei die Mittel (10, 12) zum mechanischen Sichern vorzugsweise durch Drehung des beweglichen Elements (13) aktiviert werden.

11. Vorrichtung nach dem vorangehenden Anspruch, **dadurch gekennzeichnet, dass** die Mittel (10, 12) zum mechanischen Sichern einen Aktivierungsring (12) zum Aktiveren der Mittel aufweisen, wobei der Ring um den Körper (2) der Vorrichtung herum über ein Gewinde montiert ist, wobei der Ring (12) eine mechanische Drehverbindung mit dem beweglichen Element (13) aufweist.

12. Vorrichtung nach dem vorangehenden Anspruch, **dadurch gekennzeichnet, dass** der Körper (2) einen Druckknopf (18) aufweist, der mit dem Aktivierungsring (12) zum Indexieren seiner Stellung zusammenwirken kann.

13. Vorrichtung nach dem vorangehenden Anspruch, **dadurch gekennzeichnet, dass** das bewegliche Element (13) dem Ring (12) gegenüberliegt und eine Reihe von zylindrischen Elementen (14) aufweist, die in Bohrungen gelagert sind, die parallel zur entsprechenden Längsachse verlaufen und mit entsprechenden Einkerbungen (20) zusammenwirken, die in den Ring (12) entlang der Längsachse eingebracht sind.

14. Vorrichtung nach einem der Ansprüche 12 und 13, **dadurch gekennzeichnet, dass** die Mittel (10, 12) zum mechanischen Sichern radial verlaufende Druckelemente (10) aufweisen, die mit einer bezüglich der Längsachse des Rings (12) geneigt verlaufenden Fläche und einer bezüglich der Längsachse des Steuerglieds (6) geneigt verlaufenden Fläche zusammenwirken.

15. Vorrichtung nach dem vorangehenden Anspruch, **dadurch gekennzeichnet, dass** die radial verlaufenden Druckelemente Stahlkugeln (10) aufweisen.
